# EUROPÄISCHE PATENTSCHRIFT

(11) **EP 1 784 588 B1**
(45) Veröffentlichungstag und Bekanntmachung des Hinweises auf die Patenterteilung: **02.01.2008**
(21) Anmeldenummer: 05789596.3
(22) Anmeldetag: 01.09.2005
(51) Int. Cl.: F16H 7/08, F02B 67/06

(54) **GEHÄUSE EINES SPANNSYSTEMS MIT INTEGRIERTER SPRITZDÜSE**
HOUSING OF A TENSIONING SYSTEM WITH AN INTEGRATED SPRAY NOZZLE
LOGEMENT D'UN SYSTEME DE SERRAGE COMPORTANT UN AJUTAGE DE PULVERISATION INTEGRE

(30) Priorität: 10.09.2004 DE 102004043733
(43) Veröffentlichungstag der Anmeldung: 16.05.2007
(73) Patentinhaber: Schaeffler KG, 91074 Herzogenaurach (DE)
(72) Erfinder: KOCH, Reinhard, 96193 Wachenroth (DE)
(86) Internationale Anmeldenummer: PCT/EP2005/009408
(87) Internationale Veröffentlichungsnummer: WO 2006/027153

(56) Entgegenhaltungen:
- DE-A1- 2 525 352
- DE-A1- 3 145 115
- DE-A1- 3 609 579

## Beschreibung

### Gebiet der Erfindung

Die vorliegende Erfindung betrifft ein hydraulisch betätigtes Spannsystem für einen Zugmitteltrieb, der insbesondere für eine Brennkraftmaschine bestimmt ist entsprechend dem Oberbegriff des Anspruchs 1, und wie aus der DE3145115A bekannt ist.

### Hintergrund der Erfindung

Beispielhaft zeigt die DE 36 39 389 A1 einen Kettentrieb einer Brennkraftmaschine mit einem hydraulisch betätigten Spannsystem. Das Spannsystem umfasst ein mit einem Hydraulikfluid gefülltes Gehäuse, indem ein hohlzylindrisch gestalteter, federkraftbeaufschlagter Kolben verschiebbar geführt ist. Dabei steht der Kolben unmittelbar mit einer an dem Leertrum des Zugmitteltriebs abgestützten Spannschiene in einer Wirkverbindung. Im Abstützbereich des Kolbens an der Spannschiene weist diese eine Bohrung auf. Die Größe der Bohrung ist so dimensioniert, dass eine über den Kolben ausgehende Spritzölmenge durch die Spannschiene unmittelbar auf die Außenkontur des Zugmittels geleitet wird. Diese Maßnahme dient dazu, mittels einer gezielten Schmierung die Reibung zwischen dem Zugmittel und der Spannschiene zu verringern. Diese Maßnahme zur Erzielung einer reibungsmindernden Zugmittelführung an der Spannschiene erfordert die Ausbildung eines speziellen Zylindergehäuses und einer angepassten Spannschiene.

Aus der DE 36 09 579 A1 ist ein Zugmitteltrieb für eine Brennkraftmaschine bekannt, die als Zugmittel eine Steuerkette aufweist, welche mittels einer Spannschiene vorgespannt wird. Dabei umfasst eine Lagerstelle der Spannschiene zueinander versetzte Sprühbohrungen, über die ein Schmiermittel der Steuerkette unmittelbar zugeführt wird. Diese Zugmitztelschmierung erfordert einen relativ hohen Schmiermitteldurchfluss, um gleichzeitig über alle versetzt zueinander angeordneten Sprühbohrungen ausreichend Schmiermittel der Steuerkette zuführen zu können.

### Zusammenfassung der Erfindung

Ausgehend von den Nachteilen der bekannten Lösungen, liegt der Erfindung die Aufgabe zugrunde, eine einfach darstellbare, effektive Schmierung des Zugmittels zu schaffen.

Diese Aufgabenstellung sowie weitere, die sich unter anderem aus der nachfolgenden Beschreibung der Erfindung ergeben, werden mit den Merkmalen des Anspruchs 1 gelöst. Dieser konstruktive Aufbau zur Erzielung einer Zugmittelschmierung und / oder Kühlung ist mit einfachsten technischen Mitteln kostengünstig darstellbar, beispielsweise als eine Fräsnut. Für Druckguß-Bauteile bietet es sich vorteilhaft an, die Quernut mittels einer spanlosen Anformung darzustellen. Außerdem ermöglicht die Erfindung die Quernut und damit die Spritzdüse beliebig anzuordnen. Damit kann die Spritzdüse so positioniert werden, um einen idealen Austritt Schmiermittels bzw. Hydraulikfluids zur Schmierung und / oder Kühlung sowie zur Reibungsminderung zu gewährleisten. Bevorzugt wird die Spritzdüse so angeordnet, dass diese beispielsweise die Oberfläche des Zugmittels in einem Bereich mit Schmiermittel benetzt vor einer Anlagezone der Spannschiene an dem Zugmittel. Damit stellt sich eine gewünschte reibungsoptimierte, verschleißmindernde Führung des Zugmittels an der Spannschiene ein.

Vorteilhafte Ausgestaltungen der Erfindung sind Gegenstand der abhängigen Ansprüche 2 bis 9.

Eine bevorzugte Weiterbildung der Erfindung sieht vor, die für die Befestigungsschraube bestimmte Bohrung mit zumindest einer Längsnut zu versehen, die im Bereich einer Schraubenkopfauflage des Anschraubdoms in die Quernut mündet. Die Längsnut garantiert einen definierten Durchtritt des Hydraulikfluids durch den Anschraubdom.

Weitere vorteilhafte Ausgestaltungen der Erfindung beziehen sich auf die Formgebung der Quernut. Gemäß einer bevorzugten Ausführungsform bildet die Quernut ein halbrundartig geformtes Querschnittsprofil, das kostengünstig durch eine Fräsung in den Anschraubdom bzw. in das Anschraubgehäuse eingebracht werden kann. Diese Querschnittsform ermöglicht vorteilhaft eine flächige und nicht wie bei Bohrungen üblich punktuelle Anspritzung des Schmiermittels, wodurch das Zugmittel insbesondere eine Kette breitflächig und damit über die gesamte Kontaktzone zur Spannschiene mit dem Schmiermittel benetzt werden kann.

Alternativ eignet sich dazu eine Quernut, die von der Längsnut ausgehend, keilförmig oder kegelförmig aufgeweitet ist. Dieser Öffnungsbereich ist insbesondere für Spannsysteme vorgesehen, bei dem der Anschraubdom in unmittelbarer Nähe zu dem Zugmittel plaziert ist, um trotz eines geringen Abstandes einen breitflächigen Schmiermittelauftrag auf das Zugmittel oder die Spannschiene zu erzielen.

Die Erfindung schließt weiterhin eine Quernutgestaltung ein, die von der Längsnut ausgehend sich kegelförmig oder keilförmig verengt. Damit ist die Möglichkeit geschaffen, einen größeren Abstand zwischen dem Schmiermittelaustritt und dem Zugmittel zu überbrücken.

Eine weitere vorteilhafte Alternative der Erfindung sieht vor, den Anschraubdom mit mehreren vorzugsweise zwei strahlenförmig ausgerichteten Quernuten zu versehen. Die jeweils von der Längsnut ausgehend zueinander gespreizt bzw. strahlenförmig ausgerichteten Quernuten eignen sich ebenfalls um einen breitflächigen Schmiermittelauftrag auf das Zugmittel oder die Spannschiene zu erzielen.

Das Spannsystem gemäß der Erfindung umfasst weiterhin eine Befestigungsschraube, die einen Schraubenkopf oder eine zugeordnete Scheibe einschließt, die sich radial über die gesamte Länge der Quernut erstreckt und diese vollständig abdeckt. Ergänzend dazu bietet es sich an, zwischen dem Schraubenkopf der Befestigungsschraube und einer Auflagefläche des Anschraubdoms eine separate Dichtscheibe oder ein Dichtmittel vorzusehen. Diese Maßnahme gewährleistet einen ungehinderten, gezielten und verlustfreien Durchfluss des Schmiermittels durch die Quernut, so dass eine ungehinderte Benetzung des Zugmittels und / oder der Spannschiene mit dem Schmiermittel erfolgt.

Zur Befestigung des erfindungsgemäßen Spannsystems sind bevorzugt zwei Maschinenschrauben vorgesehen, die gegenüberliegend oder zueinander versetzt jeweils beidseitig in Aufnahmebohrungen des Gehäuses eingesetzt sind und in Gewindebohrungen der Brennkraftmaschine eingeschraubt sind. Der Zuführkanal des Anschraubdoms ist weitestgehend radial zu dem Zylinderraum ausgerichtet und stellt in der Einbaulage unmittelbar eine Verbindung zwischen dem Zylinderraum des Gehäuses und der Fluidbohrung der Brennkraftmaschine her.

Nachstehend wird die Erfindung anhand von mehreren in insgesamt fünf Figuren dargestellten Ausführungsbeispielen näher erläutert.

### Kurze Beschreibung der Zeichnungen

Es zeigen:
- Figur 1: in einer Perspektive einen Zugmitteltrieb in Verbindung eines erfindungsgemäßen Spannsystems;
- Figur 2: in einer Schnittzeichnung den Aufbau eines Spannsystems;
- Figur 3: in einer Einzelteilzeichnung das Gehäuse des Spannsystems in einer Perspektive mit einer Blickrichtung auf die Auflage des Gehäuses;
- Figur 4: das Gehäuse des Spannsystem in einer weiteren perspektivischen Darstellung;
- Figur 5: einen Ausschnitt des Spannsystems, in Verbindung mit dem Zugmittel und einer Spannschiene, zur Verdeutlichung der Funktion der Spritzdüse.

### Detaillierte Beschreibung der Zeichnungen

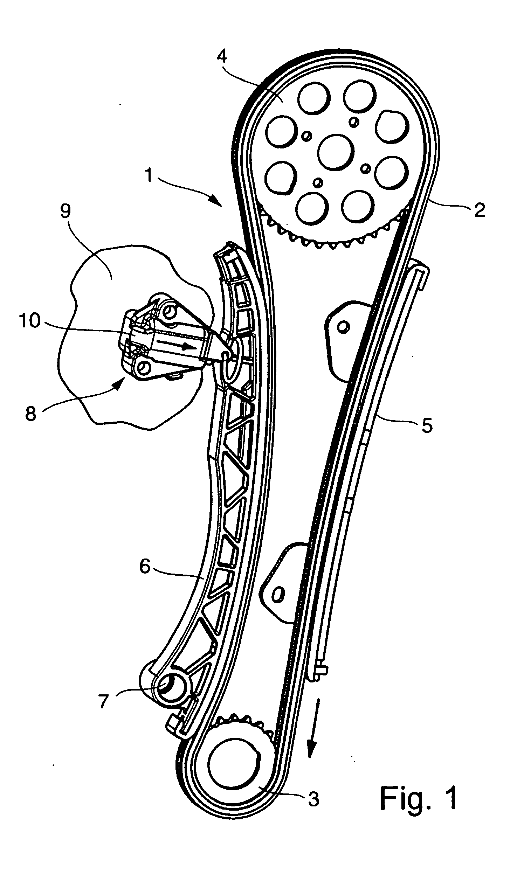

Die Figur 1 zeigt einen Zugmitteltrieb 1 einer nicht näher dargestellten Brennkraftmaschine 9. Ein Zugmittel 2 des Zugmitteltriebs 1 verbindet dabei ein Abtriebsrad 3, ein insbesondere mit der Kurbelwelle der Brennkraftmaschine verbundenes Riemenrad oder Kettenrad mit einem Antriebsrad 4, beispielsweise einem mit einer Nockenwelle der Brennkraftmaschine 9 in Verbindung stehendes Riemen- oder Kettenrad. Das im Uhrzeigersinn umlaufende Zugmittel 2 ist im Bereich eines Zugtrums an einer Führungsschiene 5 geführt. Weiterhin ist dem Zugmitteltrieb 1 im Bereich eines Leertrums eine Spannschiene 6 zugeordnet, die um eine Drehachse 7 schwenkbar ist und mit einem Spannsystem 8 zusammenwirkt.

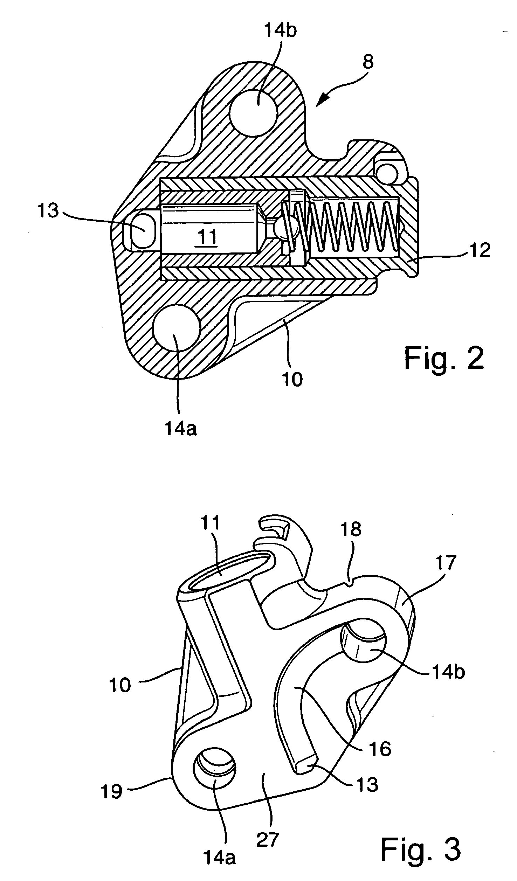

Die Drehachse 7 ist dabei an einem Ende der Spannschiene 6 vorgesehen. An dem davon abgewandten Ende ist das Spannsystem 8 der Spannschiene 6 zugeordnet. Das ortsfest an der Brennkraftmaschine 9 befestigte Spannsystem 8 wird von einem Hydraulikfluid, insbesondere einem Schmiermittel einer Druckumlaufschmierung der Brennkraftmaschine 9 beaufschlagt. Dadurch ist ein in einem Gehäuse 10 des Spannsystems 8 integrierter, verschiebbar eingesetzter, in Figur 2 abgebildeter Kolben 12 mittelbar oder unmittelbar an der Spannschiene 6 abgestützt. Im Betriebszustand übt das Spannsystem 8 eine in Pfeilrichtung wirkende Kraft auf die Spannschiene 6 aus, wodurch diese sich im Uhrzeigersinn in Richtung einer das Zugmittel 2 vorspannenden Position verschwenkt.

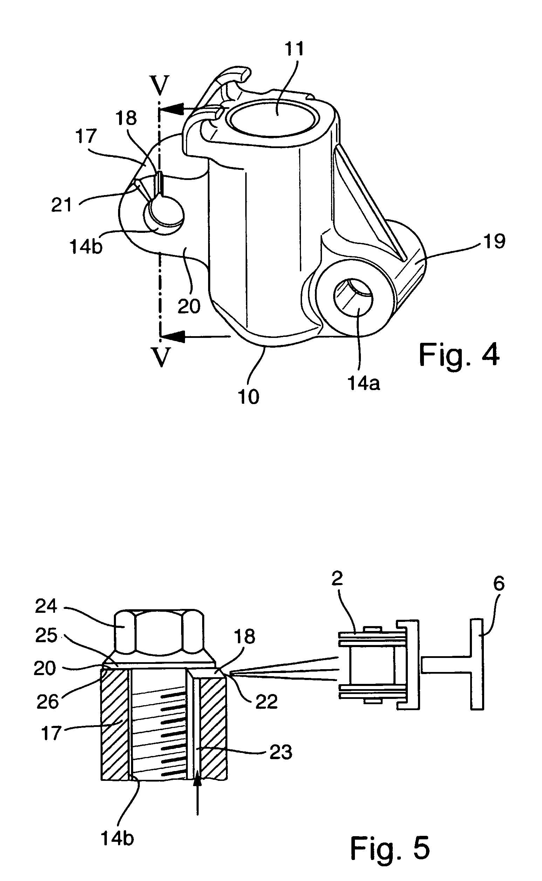

Die Figur 2 zeigt in einer Schnittdarstellung den Aufbau des Gehäuses 10, in dem ein Zylinderraum 11 zur Aufnahme des Kolbens 12 bestimmt ist. Über eine Zuführbohrung 13 ist der Zylinderraum 11 mit einer Druckumlaufschmierung der Brennkraftmaschine 9 verbunden. Zwei Bohrungen 14a, 14b des Gehäuses 10 sind jeweils für eine in Figur 5 abgebildete Befestigungsschraube 15 bestimmt, mit denen das Spannsystem 8 an der Brennkraftmaschine 9 befestigt ist.

Die Figur 3 zeigt das Gehäuse 10 in einer Perspektive mit einer Blickrichtung auf eine Auflage 27, mit der das Gehäuse und damit das Spannsystem 8 im Einbauzustand an der Brennkraftmaschine 9 anliegt. Diese Darstellung verdeutlicht die Gestaltung des Zuführkanals 16, welcher im Einbauzustand eine Fluidverbindung von der Zuführbohrung 13 des Gehäuses 10 zu einer Bohrung 14b herstellt. Dazu ist der Zuführkanal 16er bogenförmig in die Auflage 27 eingebracht. Aufgrund eines sich einstellenden Einbauspiels der Befestigungsschraube 15 in der Bohrung 14b wird im Betriebszustand Hydraulikfluid, das Schmiermittel der Brennkraftmaschine unter Druck in diesen die Befestigungsschraube 15 umschließenden Ringspalt geleitet und strömt dabei über die gesamte Länge des Anschraubdomes 17 bis in eine Quernut 18.

Die Gestaltung und Anordnung der Quernut 18 verdeutlichen die Figuren 4 und 5. Die Gehäusedarstellung gemäß Figur 4 zeigt die radial von der Bohrung 14a ausgehende Quernut 18, die mit einem halbrundartigen Querschnittsprofil in eine Auflagefläche 20 des Anschraubdoms 17 eingebracht ist. Alternativ zu einer Quernut 18 zeigt die Figur 4 eine weitere Quernut 21, wobei die Quernuten 18, 21 gespreizt bzw. strahlenförmig zueinander von der Bohrung 14b ausgehend angeordnet sind.

Die Schnittdarstellung gemäß dem Verlauf 5-5 aus Figur 4, welcher durch den Anschraubdom 17 verläuft, verdeutlicht insbesondere den Durchfluss des Hydraulikfluids bzw. des Schmierstoffs oder Schmieröls durch die Bohrung 14 sowie die Quernut 18, bevor dieses über eine endseitige Spritzdüse 22 aus dem Anschraubdom 19 austritt und das Zugmittel 2 bzw. die Spannschiene 6 beaufschlagt. Die endseitig als Spritzdüse 22 gestaltete Quernut 18 ermöglicht eine breitflächige Beaufschlagung des Zugmittels 2 mit Schmierstoff, um so die Reibung zwischen der Spannschiene 6 und dem Zugmittel 2 wirksam zu verringern und Zugmittelkomponeten ausreichend zu schmieren. Zur Vergrößerung des Fluiddurchtritts ist die Bohrung 14b ergänzend mit einer Längsnut 23 versehen, die unmittelbar in die Quernut 18 mündet. Für die Wirkungsweise der Quernut 18 bzw. der Spritzdüse 22 ist eine wirksame Abdeckung der Auflagefläche 20 über die gesamte Länge der Quernut 18 erforderlich. Entsprechend dazu ist ein Schraubenkopf 24 der Befestigungsschraube 15 einstückig oder einer separaten Scheibe 26 versehen, deren Außendurchmesser weitestgehend mit dem Durchmesser des Anschraubdoms 17 übereinstimmt, wodurch die Quernut 18 über die gesamte Länge dichtend abgedeckt ist. Die Wirksamkeit der Abdichtung verbessernd, bietet es sich weiterhin an, zwischen der Scheibe 26 und dem Anschraubdom 17 zusätzlich eine Dichtung 27 oder ein Abdichtmittel vorzusehen.

### Bezugszahlen

- 1: Zugmitteltrieb
- 2: Zugmittel
- 3: Abtriebsrad
- 4: Antriebsrad
- 5: Führungsschiene
- 6: Spannschiene
- 7: Drehachse
- 8: Spannsystem
- 9: Brennkraftmaschine
- 10: Gehäuse
- 11: Zylinderraum
- 12: Kolben
- 13: Zuführbohrung
- 14a: Bohrung
- 14b: Bohrung
- 15: Befestigungsschraube
- 16: Zuführkanal
- 17: Anschraubdom
- 18: Quernut
- 19: Anschraubdom
- 20: Auflagefläche
- 21: Quernut
- 22: Spritzdüse
- 23: Längsnut
- 24: Schraubenkopf
- 25: Scheibe
- 26: Dichtung
- 27: Auflage

## Patentansprüche

1. Hydraulisch betätigtes Spannsystem (8) für einen Zugmitteltrieb (1), der insbesondere für eine Brennkraftmaschine (9) bestimmt ist, wobei das Spannsystem (8) ein ortsfestes, einen Zylinderraum (11) bildendes Gehäuse (10) einschließt, das zur Aufnahme und Führung eines von einem Hydraulikfluid beaufschlagten Kolben (12) bestimmt ist, der unmittelbar oder mittelbar mit einer an einem Zugmittel (2) abgestützten Spannschiene (6) zusammenwirkt und das Gehäuse (10) für das Hydraulikfluid eine Zuführbohrung (13) aufweist, die in einem Einbauzustand des Spannsystems (8) eine Verbindung zwischen dem Zylinderraum (11) des Gehäuses (10) und einer Fluidbohrung der Brennkraftmaschine (9) herstellt, wobei eine Teilmenge des Hydraulikfluids zur Schmierung des Zugmitteltriebs (1) bestimmt ist, wobei die Teilmenge des Hydraulikfluids über einen mit der Zuführbohrung (13) in Verbindung stehenden Zuführkanal (16) in zumindest eine für eine Befestigungsschraube (15) bestimmte Bohrung (14b) in einem Anschraubdom (17) des Gehäuses (10) geleitet wird, **dadurch gekennzeichnet, dass** diese Bohrung (14b) im Bereich einer Auflagefläche (20) mit zumindest einer Quernut (18, 21) verbunden ist, die austrittsseitig eine Spritzdüse (22) bildet.

2. Spannsystem nach Anspruch 1, bei dem die Bohrung (14b) des Schaltdoms (17) ergänzend eine sich über die gesamte Länge des Anschraubdoms (17) erstreckende Längsnut (23) aufweist.

3. Spannsystem nach Anspruch 1, mit einer ein halbrundartig geformtes Querschnittsprofil aufweisenden Quernut (18, 21).

4. Spannsystem nach Anspruch 1, dessen Quernut (18, 21) sich von der Bohrung (14b) ausgehend, kegelförmig bzw. keilförmig aufweitet.

5. Spannsystem nach Anspruch 1, wobei die Quernut (18, 21) sich von der Spritzdüse (22) ausgehend, kegelförmig aufweitet.

6. Spannsystem nach Anspruch 1, deren Bohrung (14b) und/oder Längsnut (23) mit zwei oder mehr strahlenförmig ausgerichteten Quernuten (18, 21) verbunden ist.

7. Spannsystem nach Anspruch 1, dessen Befestigungsschraube (15) einen Schraubenkopf (24) und/oder eine separat zugeordnete Scheibe (25) einschließt, deren Durchmesser so gewählt ist, dass die Quernut (17, 21) über die gesamte Länge abgedeckt ist.

8. Spannsystem nach Anspruch 7, die eine Dichtung (26) bzw. eine Abdichtung zwischen dem Schraubenkopf (24) der Befestigungsschraube (15) und einer Auflagefläche des Anschraubdoms (17) einschließt.

9. Spannsystem nach Anspruch 1, wobei die Befestigung des Gehäuses (10) über zwei unmittelbar dem Zylinderraum (11) des Gehäuses (10) zugeordnete, gegenüberliegende Befestigungsschrauben (15) erfolgt, die jeweils in Bohrungen (14a, 14b) des Anschraubdoms (19) eingesetzt sind.

## Claims

1. Hydraulically activated tensioning system (8) for a traction mechanism (1), which is intended in particular for an internal combustion engine (9), the tensioning system (8) including a fixed housing (10) which forms a cylinder space (11) and is intended to receive and guide a piston (12) to which a hydraulic fluid is applied and which interacts directly or indirectly with a tensioning rail (6) which is supported on a traction means (2), and the housing (10) having a feed bore (13) for the hydraulic fluid, said feed bore (13) producing, in an installed state of the tensioning system (8), a connection between the cylinder space (11) of the housing (10) and a fluid bore in the internal combustion engine (9), a partial quantity of the hydraulic fluid being intended for lubricating the traction mechanism (1), the partial quantity of the hydraulic fluid being directed into at least one bore (14b), intended for an attachment screw (15), in a screw-on dome (17) of the housing (10) via a feed duct (16) which is connected to the feed bore (13), **characterized in that** this bore (14b) is connected, in the region of a bearing face (20), to at least one transverse groove (18, 21) which forms a spray nozzle (22) at the outlet end.

2. Tensioning system according to Claim 1, in which the bore (14b) of the switching dome (17) additionally has a longitudinal groove (23) which extends over the entire length of the screw-on dome (17).

3. Tensioning system according to Claim 1, having a transverse groove (18, 21) which has a cross-sectional profile which is formed as a semicircle.

4. Tensioning system according to Claim 1, the transverse groove (18, 21) of which widens in a conical shape or wedge shape starting from the bore (14b).

5. Tensioning system according to Claim 1, the transverse groove (18, 21) widening in a conical shape starting from the spray nozzle (22).

6. Tensioning system according to Claim 1, the bore (14b) and/or longitudinal groove (23) of which is connected to two or more transverse grooves (18, 21) which are oriented in the manner of beams.

7. Tensioning system according to Claim 1, the attachment screw (15) of which encloses a screw head (24) and/or a separately assigned washer (25) whose diameter is selected such that the transverse groove (18, 21) is covered over the entire length.

8. Tensioning system according to Claim 7, which encloses a seal (26) or a sealing means between the screw head (24) of the attachment screw (15) and a bearing face of the screw-on dome (17).

9. Tensioning system according to Claim 1, the housing (10) being attached by means of two attachment screws (15) which lie opposite one another, are assigned directly to the cylinder space (11) of the housing (10) and are each inserted into bores (14a, 14b) of the screw-on dome (19).

## Revendications

1. Système de serrage hydraulique (8) pour un entraînement à moyen de traction (1) qui est prévu notamment pour un moteur à combustion interne (9), le système de serrage (8) incluant un boîtier (10) fixe, formant une chambre de cylindre (11), qui est prévu pour recevoir et guider un piston (12) sollicité par un fluide hydraulique, qui coopère indirectement ou directement avec un rail de serrage (6) supporté sur un moyen de traction (2), le boîtier (10) présentant un alésage d'alimentation (13) pour le fluide hydraulique, qui produit, dans un état monté du système de serrage (8), une connexion entre la chambre du cylindre (11) du boîtier (10) et un alésage de fluide du moteur à combustion interne (9), une quantité partielle du fluide hydraulique étant prévue pour lubrifier l'entraînement à moyen de traction (1), la quantité partielle du fluide hydraulique étant guidée par le biais d'un canal d'amenée (16) en liaison avec l'alésage d'amenée (13) dans au moins un alésage (14b) prévu pour une vis de fixation (15) dans un dôme de vissage (17) du boîtier (10), **caractérisé en ce que** cet alésage (14b) est connecté dans la région d'une surface d'appui (20) à au moins une rainure transversale (18, 21) qui forme du côté de la sortie un ajutage de pulvérisation (22).

2. Système de serrage selon la revendication 1, dans lequel l'alésage (14b) du dôme de vissage (17) présente à titre complémentaire une rainure longitudinale (23) s'étendant sur toute la longueur du dôme de vissage (17).

3. Système de serrage selon la revendication 1, comprenant une rainure transversale (18, 21) présentant un profil en section transversale de forme semi-circulaire.

4. Système de serrage selon la revendication 1, dont la rainure transversale (18, 21) s'élargit depuis l'alésage (14b) en forme de cône ou de coin.

5. Système de serrage selon la revendication 1, dans lequel la rainure transversale (18, 21) s'élargit en forme de cône depuis l'ajutage de pulvérisation (22).

6. Système de serrage selon la revendication 1, dont l'alésage (14b) et/ou la rainure longitudinale (23) sont connectés à deux rainures transversales (18, 21) ou plus orientées en forme de faisceau.

7. Système de serrage selon la revendication 1, dont la vis de fixation (15) inclut une tête de vis (24) et/ou une rondelle (25) associée séparément, dont le diamètre est choisi de telle sorte que la rainure transversale (18, 21) soit recouverte sur toute sa longueur.

8. Système de serrage selon la revendication 7, qui inclut un joint d'étanchéité (26) ou une étanchéité entre la tête de vis (24) de la vis de fixation (15) et une surface d'appui du dôme de vissage (17).

9. Système de serrage selon la revendication 1, dans lequel la fixation du boîtier (10) s'effectue par le biais de deux vis de fixation (15) opposées, associées directement à la chambre de cylindre (11) du boîtier (10), qui sont insérées chacune dans des alésages (14a, 14b) du dôme de vissage (19).
